(19) Europäisches Patentamt
European Patent Office
Office européen des brevets

(11) EP 3 971 244 A1

(12) EUROPEAN PATENT APPLICATION
published in accordance with Art. 153(4) EPC

(43) Date of publication:
**23.03.2022 Bulletin 2022/12**

(21) Application number: **20804774.6**

(22) Date of filing: **14.05.2020**

(51) International Patent Classification (IPC):
***C08L 101/00*** *(2006.01)* ***C08K 5/16*** *(2006.01)*
***C08K 7/02*** *(2006.01)*

(52) Cooperative Patent Classification (CPC):
**C08K 5/16; C08K 7/02; C08L 101/00**

(86) International application number:
**PCT/JP2020/019184**

(87) International publication number:
**WO 2020/230836 (19.11.2020 Gazette 2020/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.05.2019 JP 2019092856**

(71) Applicants:
- **Seiko PMC Corporation**
  **Tokyo 103-0023 (JP)**
- **Toyota Shatai Kabushiki Kaisha**
  **Kariya-shi, Aichi 448-0002 (JP)**

(72) Inventors:
- **YOKOI Hiroaki**
  **Chiba-shi, Chiba 267-0056 (JP)**
- **HORIGUCHI Moe**
  **Chiba-shi, Chiba 267-0056 (JP)**
- **NAYA Aiko**
  **Kariya-shi, Aichi 488-0002 (JP)**

(74) Representative: **HGF**
**HGF Limited**
**1 City Walk**
**Leeds LS11 9DX (GB)**

# (54) RESIN COMPOSITION FOR MOLDING MATERIALS, MOLDED BODY, AND METHOD FOR PRODUCING RESIN COMPOSITION FOR MOLDING MATERIALS

(57) Provided is a resin composition for molding materials, comprising a plant fiber (A), a thermoplastic resin (B), and a compound (C) having a reactivity with a carboxy group.

FIG. 1

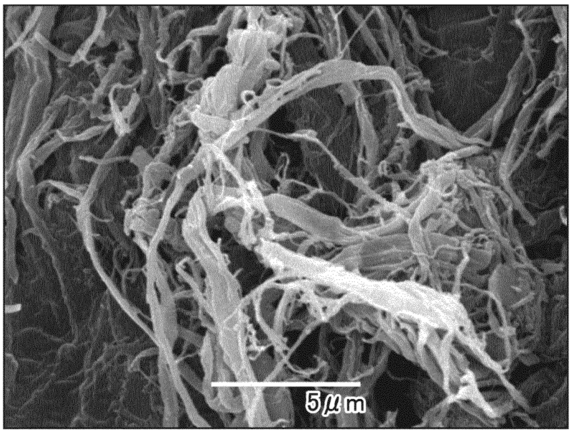


EP 3 971 244 A1

## Description

[Technical Field]

The present invention relates to a resin composition for molding materials, a molded body thereof, and a method for producing a resin composition for molding materials, which are suitable for molding material applications.
Priority is claimed on Japanese Patent Application No. 2019-092856, filed on May 16, 2019, the content of which is incorporated herein by reference.

[Background Art]

In the related art, carbon fibers, glass fibers, and the like have been widely and generally used as reinforcing materials used for resins for molding materials. However, since carbon fibers are unlikely to be burned, carbon fibers are not suitable for thermal recycling and are expensive. Further, glass fibers are relatively inexpensive, but have a disposal problem in thermal recycling. Further, since both the carbon fibers and the glass fibers have a higher density than that of resins, there is also a problem in that sufficient weight reduction cannot be expected in a case where the carbon fibers or the glass fibers are used for applications where weight reduction is desired, such as automobile components.
Cellulose-based plant fibers such as pulp, wood flour, and basts have come to be used as reinforcing materials for resins for molding materials. These plant fibers have excellent thermal recycling properties without leaving any residues even in a case of being burned and have a lower density than that of inorganic fibers, and thus resins can be reinforced without degrading the lightweight properties.
In a case where a fiber-reinforced resin containing plant fibers such as wood flour and bast as a reinforcing material is used for automobile components or the like, phenomena that volatile components such as organic acids contained in the plant fibers are attached to peripheral components may occur, which is problematic. Here, a phenomenon that occurs on a transparent member such as glass is referred to as a fogging phenomenon, and an allowable range of the amount of adhesion is set for each purpose of use (in the present specification, the phenomena that volatile components are attached to peripheral components are collectively referred to as "fogging"). The degree of the fogging phenomenon can be confirmed, for example, by comparing the haze values of members before and after a situation in which the volatile components can be attached to the members occurs and observing an increase in haze value obtained after the situation. Patent Documents 1 and 2 suggest a technique for neutralizing organic acids contained in plant fibers by adding inorganic alkalis, in order to solve the above-described problem.
In a case where plant fibers such as cellulose fibers are applied as reinforcing materials for resins for molding materials, an attempt of hydrophobically modifying the plant fibers or using defibrating resins has been made for the purpose of improving the compatibility and the interfacial strength between the plant fibers and the resins.
For example, as described in Patent Document 3, it is widely known that in a composite material formed of cellulose-based microfibrillated plant fibers and a polyolefin such as polypropylene, maleic acid-modified polypropylene is used as a compatibilizer or an interface reinforcing agent.
Further, Patent Document 4 describes that a thermoplastic resin or a thermosetting resin is mixed with modified plant fibers obtained by being modified with alkyl or alkenyl succinic anhydride in the presence of an organic liquid and microfibrillated plant fibers are uniformly dispersed in a highly hydrophobic resin, for the purpose of improving the mechanical strength of a molding material to be obtained.

[Citation List]

[Patent Documents]

[Patent Document 1]
Japanese Unexamined Patent Application, First Publication No. 2018-95708
[Patent Document 2]
PCT International Publication No. WO2014/017274
[Patent Document 3]
United States Patent Application, Publication No. 2008/0146701
[Patent Document 4]
PCT International Publication No. WO2013/133093

[Summary of Invention]

[Technical Problem]

However, since the inorganic alkalis used in Patent Documents 1 and 2 typically have a high density, there is a concern that the lightweight properties of the components to be applied are degraded in a case where the amount of the inorganic alkalis to be added in order to suppress the fogging phenomenon is increased.

Further, according to the resin compositions obtained by the methods of Patent Documents 3 and 4 described above, a lightweight molded body with high strength can be obtained, but there is a concern that components such as resin acids contained in the plant fibers, compounds containing a carboxy group or a carboxylic anhydride residue group used for modifying the plant fibers, or components derived from the compounds or compounds are desorbed in a step of applying heat, such as a step of performing mixing with a resin or a step of performing molding and thus fogging is caused.

The present invention has been made to solve the above-described problems, and an object thereof is to provide a resin composition for molding materials, a molded body thereof, and a method for producing a resin composition for molding materials, in which a lightweight molded body with suppressed fogging and high strength can be obtained.

[Solution to Problem]

As a result of intensive research conducted by the present inventors in order to solve the above-described problems, it was found that a resin composition for molding materials which is capable of producing a lightweight molded body with suppressed fogging and high strength can be obtained by using a compound having a reactivity with a carboxy group, thereby completing the present invention.

That is, the present invention includes the following aspects.

(1) A resin composition for molding materials, comprising: a plant fiber (A); a thermoplastic resin (B); and a compound (C) having a reactivity with a carboxy group.

(2) The resin composition for molding materials according to (1), wherein the plant fiber (A) is a chemically modified product modified with an acid anhydride.

(3) The resin composition for molding materials according to (1) or (2), wherein the thermoplastic resin (B) is a polyolefin-based resin.

(4) The resin composition for molding materials according to any one of (1) to (3), wherein the compound (C) having a reactivity with a carboxy group is a compound containing at least one functional group selected from the group consisting of a carbodiimide group and an oxazoline group.

(5) A molded body which is obtained by molding the resin composition for molding materials according to any one of (1) to (4).

(6) A method for producing a resin composition for molding materials, the method comprising: a step of melt-kneading a plant fiber (A), a thermoplastic resin (B), and a compound (C) having a reactivity with a carboxy group.

(7) The method for producing a resin composition for molding materials according to (6), wherein in the step of the melt-kneading, the plant fiber (A) is defibrated and dispersed in the thermoplastic resin (B).

(8) The method for producing a resin composition for molding materials according to (6) or (7), wherein a mass ratio of the plant fiber (A)/the thermoplastic resin (B)/the compound (C) having a reactivity with a carboxy group is 5 to 55/35 to 94/0.2 to 10.

[Advantageous Effects of Invention]

According to the present invention, it is possible to provide a resin composition for molding materials, a molded body, and a method for producing a resin composition for molding materials, in which a lightweight molded body with suppressed fogging and high strength can be obtained.

[Brief Description of Drawings]

Fig. 1 is a scanning electron microscope image showing modified cellulose fibers (A) that are defibrated into nanofibers and dispersed by melt-kneading the modified cellulose fibers (A) together with a thermoplastic resin (B) and a compound (C) having a reactivity with a carboxy group.

[Description of Embodiments]

Hereinafter, embodiments of a resin composition for molding materials, a molded body, and a resin composition for molding materials of the present invention will be described in detail.

«Resin composition for molding materials»

The resin composition for molding materials of an embodiment contains a plant fiber (A), a thermoplastic resin (B), and a compound (C) having a reactivity with a carboxy group.

<Plant fiber (A)>

The plant fibers (A) contained in the resin composition for molding materials of the embodiment are not particularly limited, and examples thereof include cellulose fibers, wood flour, bamboo flour, hemp, kenaf fibers, bagasse fibers, and cotton. The plant fibers (A) may be fibers contained in a plant or a processed product thereof or fibers obtained from a plant or a processed product thereof.

The plant fibers (A) contained in the resin composition for molding materials are not particularly limited and may be in a state of being purified from a plant raw material such as pulp or a state of forming a complex with other components constituting a plant such as wood flour.

Examples of raw materials that can be used to obtain the plant fibers (A) and particularly cellulose fibers include plants such as wood, bamboo, hemp, jute, kenaf, cotton, and beets, and processed products thereof. Wood is a preferred exemplary example as a raw material for cellulose fibers. Examples of the plant species of wood include pinus, Cryptomeria japonica, Japanese cypress, eucalyptus, and acacia. Further, pulp, paper, used paper, and the like obtained by using these plants or processed products thereof as raw materials can also be used as raw materials that can be used to obtain cellulose fibers. The plant fibers (A) may be used alone or in combination of two or more kinds thereof.

Examples of the pulp include chemical pulp (such as unbleached kraft pulp (UKP), bleached kraft pulp (BKP), or sulfite pulp (SP)), semi-chemical pulp (SCP), chemi-groundwood pulp (CGP), chemi-mechanical pulp (CMP), ground pulp (GP), refiner mechanical pulp (RMP), thermo-mechanical pulp (TMP), and chemi-thermo-mechanical pulp (CTMP), which are obtained by pulping the plant raw materials chemically or mechanically or pulping the plant raw materials chemically and mechanically.

A component that causes fogging is attached to the plant fiber (A) in some cases, and examples of such a plant fiber (A) include those containing a volatile organic compound that contains a carboxy group. The compound can cause fogging. The volatile organic compound containing a carboxy group may be a natural product synthesized in a plant. As the volatile organic compound containing a carboxy group, those attached to plant fibers of raw materials and also attached to the plant fibers (A) in the form of being contained in the resin composition for molding materials are exemplary examples. The volatile organic compound may be an organic compound that is volatile and enters a gas state in the atmosphere, and examples thereof include an organic compound having a boiling point of 50°C or higher and 260°C or lower at 1 atm.

Further, the resin composition for molding materials may contain at least one compound selected from the group consisting of fatty acids, resin acids, and esters thereof. The compound is known to be contained, for example, in wood and can cause fogging. A compound containing a carboxy group such as a fatty acid or a resin acid may correspond to a volatile organic compound.

The fatty acid may be an unsaturated fatty acid or a saturated fatty acid, but it is known that the fatty acid is mainly an unsaturated fatty acid. The number of carbon atoms of the fatty acid may be, for example, in the range of 6 to 24 or in the range of 12 to 18. Examples of the unsaturated fatty acid include linoleic acid and oleic acid. Examples of the saturated fatty acid include palmitic acid and stearic acid.

The resin acid may be a carboxylic acid, and examples thereof include a diterpene carboxylic acid such as abietic acid and an aromatic carboxylic acid such as benzoic acid and cinnamic acid.

The fatty acid and the resin acid may be a free acid, but may be present, for example, as an ester with glycerin, sitosterol, or alcohol. Esters of the fatty acid and the resin acid can be decomposed into a fatty acid and a resin acid.

From the viewpoint of containing more components that may cause fogging, the plant fibers (A) may contain at least one selected from the group consisting of unbleached pulp, unbleached kraft pulp, and wood flour.

It is more preferable that the plant fibers (A) are defibrated into nanofibers to the extent that desired physical properties can be obtained. That is, it is preferable that the plant fibers (A) are nanofibers. Here, the nanofibers typically indicate plant fibers defibrated to the extent that the average fiber diameter thereof is less than 1000 nm and preferably in the range of 4 to 800 nm, and preferred examples of the plant fibers include nanofibers of cellulose fibers (cellulose nanofibers: CNF).

CNF is a fiber obtained by performing a treatment such as mechanical defibration on a cellulose fiber, and

examples thereof include fibers having an average fiber diameter of 4 to 200 nm and a number average fiber length of 5 μm or greater. The specific surface area of CNF is preferably in the range of 70 to 300 $m^2/g$, more preferably in the range of 70 to 250 $m^2/g$, and still more preferably in the range of 100 to 200 $m^2/g$. By increasing the specific surface area of CNF, the contact area can be increased and the strength is improved in a case where the resin composition is obtained. Further, in a case where the specific surface area is less than or equal to the above-described upper limit, aggregation of the resin composition in the resin is unlikely to occur, and the strength of a molded body is likely to be improved. The average fiber diameter of CNF may be preferably in the range of 4 to 200 nm, more preferably in the range of 4 to 150 nm, and still more preferably in the range of 4 to 100 nm.

The shape of the fibers in the resin composition for molding materials or the molded body can be measured by washing the resin components in the resin composition for molding materials (or the molded body) with a solvent that can dissolve the resin components and observing the fiber content contained in the residues with a scanning electron microscope. For example, the measurement can be performed by wrapping a resin composition (or a molded body) sample for molding materials that contains the plant fiber (A) with a 325 mesh stainless mesh, treating the sample at 140°C for 5 hours under reflux of xylene so that the resin is dissolved and the fiber content is extracted and dried, and observing the fiber content with a scanning electron microscope (for example, JSM-5610LV, manufactured by JEOL Ltd.). In the measurement of the shape of the fibers, each value can be acquired as an average value in a case where at least 50 or more fibers in the field of view of a scanning electron microscope are measured.

Further, the plant fibers (A) may be defibrated into nanofibers in the resin composition for molding materials after carrying out mixing according to a method for producing a resin composition for molding materials described below, and thus the plant fibers (A) are not necessarily defibrated into nanofibers before carrying out mixing.

The plant fiber (A) may be used as it is, but it is preferable that the plant fiber (A) is a chemically modified product that is modified with an acid anhydride. The chemically modified product may be generated by reacting an acid anhydride with a hydroxyl group of a plant fiber and may have an ester bond generated by reacting the acid anhydride with the hydroxyl group of a plant fiber. The reaction between an acid anhydride and a hydroxyl group of a plant fiber leads to improvement of the compatibility and the interfacial adhesiveness because of the improvement of the interaction with the resin, and further, high dispersibility can be achieved by inhibiting a hydrogen bond in the plant fiber and between the plant fibers. In addition, the strength of the obtained molded body can be increased.

As the acid anhydride, a carboxylic anhydride may be used, and examples thereof include acetic anhydride, butyric anhydride, propionic anhydride, benzoic anhydride, and stearic anhydride. The chemically modified product generated by reacting a carboxylic anhydride with a hydroxyl group of a plant fiber may have an ester bond and a carboxy group which are generated by reacting the carboxylic anhydride with the hydroxyl group of a plant fiber. Among the examples of the acid anhydride, acetic anhydride is preferable from the viewpoints of the availability and ease of introduction.

Among the acid anhydrides, examples of a polyvalent basic acid anhydride include an alkyl or alkenyl succinic anhydride, a maleic anhydride, a phthalic anhydride, a succinic anhydride, maleic anhydride-modified polyolefin, and maleic anhydride-modified polybutadiene. Among these, from the viewpoint of the compatibility with the resin, an acid anhydride containing a hydrophobic group is preferable, and an alkyl succinic anhydride or an alkenyl succinic anhydride is preferable.

The alkyl group or the alkenyl group in the alkyl succinic anhydride or the alkenyl succinic anhydride has properties of the above-described hydrophobic group. The alkyl group or the alkenyl group may be linear or branched. The number of carbon atoms of the alkyl group or the alkenyl group may be, for example, in the range of 8 to 20 or in the range of 12 to 18.

Examples of the alkyl group include an octyl group, a nonyl group, a decyl group, an undecyl group, a dodecyl group, a tetradecyl group, a hexadecyl group, an octadecyl group, and an icosyl group. Examples of the alkenyl group include an octenyl group, a nonenyl group, a decenyl group, an undecenyl group, a dodecenyl group, a tetradecenyl group, a hexadecenyl group, an octadecenyl group, and an icosenyl group.

As the alkyl succinic anhydride or the alkenyl succinic anhydride, an octenyl succinic anhydride, a dodecenyl succinic anhydride, a hexadecenyl succinic anhydride, an octadecenyl succinic anhydride, and the like are preferable.

The plant fiber (A) may be a chemically modified product modified with the carboxylic anhydride, and the chemically modified product may contain a carboxy group derived from the acid anhydride.

The plant fiber (A) may be a chemically modified product modified with the carboxylic anhydride containing a hydrophobic group, and the chemically modified product may contain a carboxy group derived from the carboxylic anhydride.

The plant fiber (A) may be a chemically modified product modified with the alkyl succinic anhydride or the alkenyl succinic anhydride, and the chemically modified product may contain a carboxy group derived from the alkyl succinic anhydride or the alkenyl succinic anhydride.

The fixation rate of the acid anhydride on the plant fiber is calculated based on the following formula.

$$\text{Fixation rate (\%)} = \text{(dry mass of modified plant fiber (A) - dry mass of plant fiber)/(dry mass of plant fiber)} \times 100$$

From the viewpoint of the balance between the production cost and the appropriate improvement in the resin dispersibility of the plant fiber, the fixation rate thereof is preferably in the range of 5 to 50% by mass and more preferably in the range of 5 to 30% by mass. For example, Fourier transform infrared spectroscopy (FT-IR) is used to confirm the fixation of the acid anhydride with a chemical bond.

<Thermoplastic resin (B)>

The thermoplastic resin indicates a resin having plasticity that can be softened by being heated and can be molded into a desired shape. In the present specification, the concept of the thermoplastic resin includes a thermoplastic elastomer. The thermoplastic elastomer indicates an elastomer (a polymer having elasticity) having plasticity that can be softened by being heated and can be molded into a desired shape. Examples of the thermoplastic resin include resins, for example, a polyamide resin such as nylon; a polyolefin resin such as polyethylene, polypropylene, an ethylene-propylene copolymer, or an ethylene vinyl acetate copolymer; a polyester resin such as polyethylene terephthalate or polybutylene terephthalate; an acrylic resin such as polymethyl methacrylate or polyethyl methacrylate; a styrene resin such as polystyrene or a (meth)acrylic acid ester-styrene resin; a thermoplastic resin such as a polyurethane resin, an ionomer resin, or a cellulose resin; and a thermoplastic elastomer such as an olefin-based elastomer, a vinyl chloride-based elastomer, a styrene-based elastomer, a urethane-based elastomer, a polyester-based elastomer, or a polyamide-based elastomer; and mixtures of two or more kinds thereof. Among these, a polyolefin-based resin such as a polyethylene resin, a polypropylene resin, or an ethylene-vinyl acetate copolymer is preferable as the thermoplastic resin. The polyolefin-based resin indicates a homopolymer or copolymer having a constitutional unit derived from an olefin. The thermoplastic resin may be used alone or in combination of two or more kinds thereof.

<Compound (C) having reactivity with carboxy group>

The compound (C) having a reactivity with a carboxy group may be a compound that reacts with a carboxy group to form a covalent bond. As the compound (C) having a reactivity with a carboxy group, an organic compound is preferable, and examples thereof include a compound containing at least one group selected from the group consisting of a carbodiimide group, an oxazoline group, an epoxy group, an isocyanate group, a silanol group, an aziridinyl group, an amino group, and a hydroxyl group. Among these, a compound containing at least one functional group selected from the group consisting of a carbodiimide group and an oxazoline group is preferable, and a compound containing a carbodiimide group is more preferable.

The form of the compound having s reactivity with a carboxy group is not particularly limited, but the compound in a solid state is preferable in consideration of the mixing properties with a thermoplastic resin.

As the compound containing a carbodiimide group, a compound containing one or more carbodiimide groups in a molecule or a typical synthetic product can be used. Examples thereof include dicyclohexylcarbodiimide and diisopropylcarbodiimide. Further, a compound containing a carbodiimide group may be synthesized by a known method, or a commercially available carbodiimide compound may be used. Examples of the commercially available polycarbodiimide compound include CARBODILITE HMV-15CA and CARBODILITE LA-1 (both manufactured by Nisshinbo Chemical Inc.), and STABAXOL P (manufactured by Rhein Chemie Japan Ltd.). From the viewpoint of more effectively suppressing the volatile component containing a carboxy group, it is particularly preferable to use a polycarbodiimide compound containing two or more carbodiimide groups in a molecule.

The compound containing an oxazoline group may contain one or more oxazoline groups in a molecule and can be obtained by polymerizing alkenyl oxazoline alone or together with various unsaturated monomers as necessary according to a known method. Examples of the alkenyl oxazoline include 2-vinyl-2-oxazoline, 4-methyl-2-vinyl-2-oxazoline, 5-methyl-2-vinyl-2-oxazoline, 4,4-dimethyl-2-vinyl-2-oxazoline, and 2-isopropenyl-2-oxazoline. The alkenyl oxazoline may be used alone or two or more kinds thereof.

From the viewpoint of more effectively suppressing the volatile component containing a carboxy group, a compound containing two or more oxazoline groups in a molecule is preferable. Examples of the compound containing an oxazoline group include a polymer containing an oxazoline group in a side chain, and the kind of resin serving as the polymer main chain of the polymer is not particularly limited, and an appropriate resin can be used in consideration of the mixing properties with a thermoplastic resin.

The amount of the oxazoline group of the compound containing an oxazoline group may be, for example, in the range of 0.01 to 10 mmol/g or in the range of 0.1 to 1 mmol/g.

As the compound containing an oxazoline group, a commercially available oxazoline compound may be used. Examples of the commercially available product include EPOCROS RPS-1005 (manufactured by Nippon Shokubai Co., Ltd.).

<Reaction of compound (C) having reactivity with carboxy group>

Examples of the component that can cause fogging include the following components in addition to the fatty acid and the resin acid that can be contained in the plant fiber (A), in a case where the plant fiber (A) is a chemically modified product modified with an acid anhydride.

Examples of the component include a component i) that has not reacted with plant fibers among acid anhydrides used for modifying the plant fibers (A), and
a component ii) that is desorbed in a step of applying heat, such as a step of performing mixing with a resin or a step of performing molding after acid anhydrides used for modifying the plant fibers (A) react with the plant fibers.

The acid anhydrides used for modifying the plant fibers (A) typically contain a carboxy group that is ring-opened in the composition, and a compound containing these acid anhydrides or a free carboxy group derived from these acid anhydrides may cause fogging.

It is considered that since the resin composition for molding materials according to the embodiment contains the compound (C) having a reactivity with a carboxy group, the compound (C) reacts with a compound containing a carboxy group that may cause fogging to generate a reactant, and thus fogging can be suppressed. The reason for this is considered to be that since the compound (C) having a reactivity with a carboxy group reacts with a compound containing a carboxy group that may cause fogging to generate a reactant, the molecular weight of the compound containing a carboxy group that may cause fogging is increased and the volatility is decreased.

The compound (C) exhibits an action of suppressing fogging in the step of producing the resin composition for molding materials and in the produced resin composition for molding materials and also exhibits the action of suppressing fogging even after a molded body is obtained.

The compound containing a carboxy group may be a compound derived from the fatty acid, the resin acid, or the acid anhydride described above, and examples thereof include those exemplified in the section of the plant fiber (A).

Examples of the reaction between the compound containing a carboxy group and the compound containing a carbodiimide group include those represented by Formula (1).

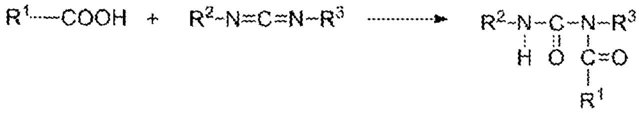

... (1)

(In Formula (1), $R^1$, $R^2$, and $R^3$ each independently represent a hydrogen atom or a monovalent organic group.)

Examples of the reaction between the compound containing a carboxy group and the compound containing an oxazoline group include those represented by Formula (2).

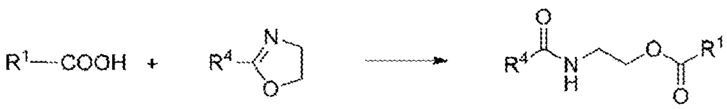

... (2)

(In Formula (2), $R^1$ and $R^4$ each independently represent a hydrogen atom or a monovalent organic group.)

<Other components>

Inorganic alkalis found to be effective in suppressing fogging in spite of having a high density may be used in combination for the purpose of obtaining a lightweight molded body having high rigidity.

Examples of the inorganic alkalis include calcium oxide, calcium hydroxide, calcium carbonate, magnesium oxide, magnesium hydroxide, and magnesium carbonate.

Various additives such as a compatibilizer, a dispersant, a surfactant, an antioxidant, a flame retardant, a pigment, an inorganic filler, a plasticizer, a crystal nucleating agent, and a foaming assistant may be blended at the same time as long as the effects of the present invention are not impaired.

Examples of the compatibilizer include maleic anhydride, a maleic anhydride-modified polyethylene resin, a maleic anhydride-modified polypropylene resin, and an epoxy group-containing resin (such as a copolymer of glycidyl methacrylate and ethylene), and various commercially available compatibilizers may be used.

The resin composition for molding materials according to the embodiment contains the compound (C) having a reactivity with a carboxy group, and thus fogging caused by the compound having a carboxy group can be effectively suppressed. Further, the compound (C) having a reactivity with a carboxy group effectively suppresses fogging caused by a compound containing a carboxy group, and as a result, the compound (C) may be contained in the resin composition for molding materials according to the embodiment in the form of a reactant between a compound containing a carboxy group and the compound (C) having a reactivity with a carboxy group.

According to the resin composition for molding materials of the embodiment, it is possible to provide a resin composition for molding materials from which a molded body in which the characteristics of suppressing fogging, the lightweight, and the high strength are achieved in a well-balanced manner can be obtained.

«Method for producing resin composition for molding materials»

The resin composition for molding materials according to the embodiment can be produced by mixing the plant fiber (A), the thermoplastic resin (B), and the compound (C) having a reactivity with a carboxy group. Examples of the plant fiber (A), the thermoplastic resin (B), and the compound (C) having a reactivity with a carboxy group include those exemplified in the section of the resin composition for molding materials above, and the description thereof will not be provided.

A method for producing the resin composition for molding materials according to the embodiment may include a step of melt-kneading the plant fiber (A), the thermoplastic resin (B), and the compound (C) having a reactivity with a carboxy group. Further, the melt-kneading is a form of the mixing described above. In the melt-kneading, at least the thermoplastic resin (B) may be melted. The melt-kneading indicates mixing of the melted thermoplastic resin (B), the plant fiber (A), and the compound (C) having a reactivity with a carboxy group.

According to the method for producing a resin composition for molding materials of the embodiment, the resin composition for molding materials according to the embodiment can be produced.

The blending ratio of the plant fiber (A), the thermoplastic resin (B), and the compound (C) having a reactivity with a carboxy group in the method for producing the resin composition for molding materials according to the embodiment is not particularly limited, but from the viewpoints of both the plant fiber content preferable for obtaining desired strength in the molded body obtained by using the resin composition for molding materials and the effect of suppressing fogging, the plant fiber (A), the thermoplastic resin (B), and the compound (C) having a reactivity with a carboxy group may be blended such that the mass ratio of (A)/(B)/(C) is in the range of 1 to 55/35 to 99/0.2 to 10, in the range of 5 to 40/50 to 98/1 to 10, or in the range of 7 to 35/60 to 95/1 to 6.

The blending ratio of the plant fiber (A) with respect to 100% by mass of the total mass of the resin composition for s molding material according to the embodiment is not particularly limited, but the content preferable for obtaining desired strength in the molded body obtained by using the resin composition for molding materials may be in the range of 1 to 50% by mass, in the range of 5 to 40% by mass, or in the range of 10 to 30% by mass.

The fogging component can be captured by reacting the component that causes fogging with the compound (C) while the plant fiber (A), the thermoplastic resin (B), and the compound (C) are melt-kneaded using a uniaxial or multiaxial kneader, a kneader, or the like and the plant fiber is uniformly mixed and dispersed in the resin component in the mixing. The mixing order of the plant fiber (A), the thermoplastic resin (B), and the compound (C) is not particularly limited, and for example, the plant fiber (A) and the compound (C) are mixed in advance before the plant fiber (A) and the thermoplastic resin (B) are mixed.

In the production method according to the embodiment, the melt-kneading can be performed using a uniaxial or multiaxial kneader, a kneader, or the like. The blending order, the mixing temperature, and the melting timing of the raw materials in the melt-kneading are not particularly limited. For example, the plant fiber (A), the thermoplastic resin (B), and the compound (C) may be melt-kneaded, or the plant fiber (A) and the thermoplastic resin (B) may be melt-kneaded in advance and then mixed with the compound (C). In consideration of the processability, the melting temperature of the plant fiber (A) and the thermoplastic resin (B), the dispersion, the deterioration, and the reactivity of the compound (C) having a reactivity with a carboxy group, the melt-kneading temperature of the kneaded product during the kneading is preferably in the range of 100°C to 220°C. Further, the screw rotation speed of the uniaxial or multiaxial kneader is preferably in the range of 25 to 400 rpm for the entire stroke.

In the melt-kneading step, it is preferable that the plant fibers (A) are defibrated and dispersed in the thermoplastic resin (B). The expression of "in the thermoplastic resin (B)" indicates a state where the plant fibers (A) are dispersed using the melted thermoplastic resin (B) as a dispersion medium. In the defibration, it is more preferable that the plant fibers (A) are defibrated into nanofibers. It is preferable that the plant fibers (A) defibrated in the thermoplastic resin (B) are cellulose nanofibers.

In a case where the plant fibers (A) are defibrated into nanofibers, the reinforcing effect is excellent. The reinforcing effect does not change even in a case where the plant fibers defibrated into nanofibers in advance are blended with the resin or the plant fibers in the thermoplastic resin are uniformly dispersed in the resin while being defibrated

into nanofibers, but a high share is required to be imparted typically in a state where the plant fibers are dispersed in water in an amount ten times or greater the amount of the plant fibers in order to defibrate the plant fibers into nanofibers in advance. In a case where such nanofibers are blended with a resin, the defibration into nanofibers requires a lot of energy and the blending with a resin requires removal of a large amount of water, which results in a high manufacturing cost.

The method for dispersing the plant fibers in the thermoplastic resin while defibrating the plant fibers into nanofibers is more advantageous than the method of using nanofibers defibrated in advance, in terms of the energy cost.

By chemically modifying the plant fibers, the plant fibers are likely to be uniformly dispersed in the resin while the plant fibers are defibrated into nanofibers in the thermoplastic resin, and thus the bending elastic modulus and the bending strength of a molded body to be obtained can be improved.

<Molded body/method for producing molded body>>

The resin composition for molding materials according to the embodiment can be used as a molding material for producing a molded body.

The molded body of the embodiment is obtained by molding the resin composition for molding materials according to the embodiment described above. The molded body can be obtained, for example, by molding the resin composition for molding materials that has been softened by being heated. The molded body can be obtained, for example, by molding the melt-kneaded resin composition for molding materials.

According to one embodiment, it is possible to provide a method for producing a molded body, including a step of molding the melt-kneaded resin composition for molding materials. Examples of the molding include press molding, injection molding, extrusion molding, blow molding, stretch molding, and foam molding. Examples of the shape of the molded body include a sheet shape, a film shape, a pellet shape, and a powder shape. The molded body having any of these shapes may be further molded into a form used in the final product according to the molding method or the like described above. Examples of the plant fiber (A), the thermoplastic resin (B), and the compound (C) having a reactivity with a carboxy group which are contained in the molded body include those exemplified in the section of the resin composition for molding materials above, and the description thereof will not be provided.

The resin composition for molding materials can be formed into a desired molded body by further adding various additives to the above-described resin composition for molding materials and molding the resin composition, depending on the intended purpose of use.

The bending elastic modulus of the molded body according to the embodiment is preferably 2.0 GPa or greater, more preferably 3.0 GPa or greater, and still more preferably 3.3 GPa or greater. The upper limit of the bending elastic modulus of the molded body is not particularly limited, but may be, for example, 5 GPa or less.

The numerical range of the bending elastic modulus of the molded body may be 2.0 GPa or greater and 5 GPa or less, 3.0 GPa or greater and 5 GPa or less, or 3.3 GPa or greater and 5 GPa or less.

The value of the bending elastic modulus of the molded body is set to a value acquired under the conditions described in the examples.

(Bending elastic modulus)

The resin composition for molding materials is injection-molded at an injection temperature of 200°C and a mold temperature of 25°C using an injection molding machine, and thereby obtaining a strip-shaped test piece (Type B1, JIS K 7139) having a length of 80 mm, a width of 10 mm, and a thickness of 2 mm. The bending elastic modulus is measured by applying a load to the test piece at a temperature of 23°C, a humidity of 50% RH, a distance of 64 mm between fulcrums, and a speed of 2 mm/min using a test machine in conformity with JIS K 7171.

The bending strength of the molded body according to the embodiment is preferably 65 MPa or greater, more preferably 67 MPa or greater, and still more preferably 68.5 MPa or greater. The upper limit of the bending strength of the molded body is not particularly limited, but may be, for example, 80 MPa or less.

The numerical range of the bending strength of the molded body may be 65 MPa or greater and 80 MPa or less, 67 MPa or greater and 80 MPa or less, or 68.5 MPa or greater and 80 MPa or less.

The value of the bending strength of the molded body is set to a value acquired under the conditions described in the examples.

(Bending strength)

The resin composition for molding materials is injection-molded at an injection temperature of 200°C and a mold temperature of 25°C using an injection molding machine, and thereby obtaining a strip-shaped test piece (Type B1, JIS K 7139) having a length of 80 mm, a width of 10 mm, and a thickness of 2 mm. The bending strength is measured

by applying a load to the test piece at a temperature of 23°C, a humidity of 50% RH, a distance of 64 mm between fulcrums, and a speed of 2 mm/min using a test machine in conformity with JIS K 7171.

The density of the molded body according to the embodiment is preferably 1.01 g/cm$^3$ or less and more preferably 1.005 g/cm$^3$ or less. The lower limit of the density of the molded body is not particularly limited, but may be, for example, 0.8 g/cm$^3$ or greater or 0.9 g/cm$^3$ or greater. The value of the density of the molded body is set to a value acquired under the conditions described in the examples.

The obtained molded body can be used for automobile components, household electric appliances, construction materials, packaging materials, and the like.

[Examples]

Hereinafter, examples of the present invention will be described. Further, the present invention is not limited to these examples. In addition, "parts" indicates "parts by mass" unless otherwise specified.

«Method for measuring physical property value»

Methods for measuring a physical property value used in the examples are as follows.

<1> Calculation of fixation rate of acid anhydride on plant fiber

The fixation rate of an acid anhydride on the plant fiber in a case where the plant fiber was chemically modified with an acid anhydride was calculated based on the following formula.

$$\text{Fixation rate (\%)} = (\text{dry mass of modified plant fiber} - \text{dry mass of plant fiber})/(\text{dry mass of plant fiber}) \times 100$$

Further, the dry mass of the modified plant fiber was measured by the following method. A dispersion liquid was prepared by adding tetrahydrofuran to the modified plant fiber obtained by the method of Production Example 1 such that the mass of tetrahydrofuran was 100 times the total amount of the modified plant fiber, the dispersion liquid was stirred with a homogenizer (manufactured by Nihon Seiki Co., Ltd.) at 10000 rpm for 1 minute, and the dispersion liquid was suction-filtered. The filtration residue was dried at 110°C using an electric dryer, and the dry mass thereof was measured.

FT-IR (manufactured by JASCO Corporation) was used to confirm the fixation of the acid anhydride on the plant fiber. In the modified plant fiber whose dry mass was measured, spectral absorption which was not found in unmodified plant fibers at 1500 to 2000 cm$^{-1}$ was found.

<2> Fogging test method

Four test pieces (20 mm × 10 mm × 4 mm) obtained by injection-molding each material were placed in a glass cup (inner diameter of 42 mm, height of 50 mm), the opening portion (13.8 cm$^2$) was closed with a glass plate (76 mm × 52 mm × 1.5 mm), an aluminum plate (75 mm × 50 mm × 5 mm) for heat dissipation was placed on the glass plate, and the test pieces were heated for 6 hours on the hot plate in which the bottom surface of the glass cup was set at 130°C. The cloudiness (haze value (%)) of the glass plate provided for the test was measured with a haze meter (NDH5000; manufactured by Denshoku Industries Co., Ltd.). As the haze value increases, the cloudiness increases.

<3> Method for evaluating mechanical strength

The obtained resin composition was put into a manual injection molding machine (model: 18D1, manufactured by Imoto Machinery Co., Ltd.) and injection molded at an injection temperature of 200°C and a mold temperature of 25°C, thereby obtaining a strip-shaped test piece (Type B1, JIS K 7139) (molded body) having a length of 80 mm, a width of 10 mm, and a thickness of 2 mm. The bending strength and the bending elastic modulus were measured by applying a load to the test piece at a temperature of 23°C, a humidity of 50% RH, a distance of 64 mm between fulcrums, and a speed of 2 mm/min using a universal testing instrument "TENSILON RTM-50" (manufactured by Orientec Co., Ltd.) in conformity with JIS K 7171.

<4> Method for measuring density

The density was calculated by measuring the mass in air and the mass in water of the molded body obtained by the <method for evaluating mechanical strength> described above, acquiring the density according to the Archimedes' method, and dividing the density by the value of the density of water.

«Production of modified cellulose fiber»

(Production Example 1)

A clean container was charged with 500 parts by mass of softwood bleached kraft pulp (NBKP) having a solid content of 20% by mass and 150 parts by mass of N-methylpyrrolidone (NMP), water was distilled off under reduced pressure, 19.9 parts by mass of a hexadecenyl succinic anhydride was added thereto, and the mixture was allowed to react at 80°C for 4 hours. After completion of the reaction, NMP was distilled off under reduced pressure, thereby obtaining modified cellulose fibers (A-1). The fixation rate of the hexadecenyl succinic anhydride was 8.6%.

«Production 1 of resin composition»

(Example 1)

25 parts of the modified cellulose fibers (A-1), 75 parts of a commercially available polypropylene resin (PP resin) (B, NOVATEC MA04A, manufactured by Japan Polypropylene Corporation), and 4 parts of a carbodiimide group-containing compound (C-1, CARBODILITE HMV-15CA, manufactured by Nisshinbo Chemical Inc.) as a compound having a reactivity with a carboxy group were melt-kneaded at 170°C with a LABO PLASTOMILL (manufactured by Toyo Seiki Seisaku-sho Ltd.) which is a kind of kneader, thereby obtaining a resin composition (D-1). The modified cellulose fibers (A-1) were defibrated into nanofibers and dispersed in the polypropylene resin (B) (Fig. 1).

(Example 2)

A resin composition (D-2) was obtained in the same manner as in Example 1 except that a carbodiimide group-containing compound (C-2, STABAXOL P, manufactured by LANXESS K. K.) was used as a compound having a reactivity with a carboxy group.

(Example 3)

A resin composition (D-3) was obtained in the same manner as in Example 1 except that an oxazoline group-containing compound (C-3, EPOCROS RPS-1005, manufactured by Nippon Shokubai Co., Ltd.) was used as a compound having a reactivity with a carboxy group.

- EPOCROS RPS-1005 (amorphous type reactive polymer in which oxazoline group is formed into pendant in polystyrene main chain, amount of oxazoline group: 0.27 mmol/g·solid, number average molecular weight (Mn): approximately 70000, weightaverage molecular weight (Mw): approximately 160000)

(Example 4)

A resin composition (D-4) was obtained in the same manner as in Example 1 except that an epoxy group-containing compound (C-4, DENACOL EX421, manufactured by Nagase ChemteX Corporation) was used as a compound having a reactivity with a carboxy group.

(Comparative Example 1)

A resin composition (D-5) was obtained in the same manner as in Example 1 except that a compound having a reactivity with a carboxy group was not added.

(Comparative Example 2)

A resin composition (D-6) was obtained in the same manner as in Example 1 except that 2 parts of calcium oxide (c-5, manufactured by Fujifilm Wako Pure Corporation, special grade reagent) was used in place of the compound

having a reactivity with a carboxy group.

(Comparative Example 3)

A resin composition (D-7) was obtained in the same manner as in Comparative Example 2 except that the blending ratio of calcium oxide (c-5) was changed to 0.25 parts.

The results obtained by measuring the physical properties of the resin compositions obtained in Examples 1 to 4 and Comparative Examples 1 to 3 are shown in Evaluation Example 1.

[Table 1]

| Evaluation Example 1 | | | | | | | | | |
|---|---|---|---|---|---|---|---|---|---|
| | (Modified) cellulose fiber | | PP resin (B) | Compound having reactivity with carboxy group | | Haze value (%) | Bending elastic modulus (GPa) | Bending strength (MPa) | Density (g/cm$^3$) |
| | | Parts by mass | Parts by mass | | Parts by mass | | | | |
| Example 1 | A-1 | 25 | 75 | C-1 | 4 | 0.5 | 3.4 | 72.3 | 1.001 |
| Example 2 | A-1 | 25 | 75 | C-2 | 4 | 9.9 | 3.6 | 71.5 | 1.001 |
| Example 3 | A-1 | 25 | 75 | C-3 | 4 | 9.0 | 3.5 | 69.3 | 1.002 |
| Example 4 | A-1 | 25 | 75 | C-4 | 4 | 1.4 | 3.0 | 68.8 | 1.001 |
| Comparative Example 1 | A-1 | 25 | 75 | - | - | 35.2 | 3.4 | 68.0 | 1.001 |
| Comparative Example 2 | A-1 | 25 | 75 | c-5 | 2 | 0.6 | 3.3 | 66.2 | 1.049 |
| Comparative Example 3 | A-1 | 25 | 75 | c-5 | 0.25 | 15.5 | 3.4 | 67.7 | 1.012 |

Evaluation Example 1 shows that a molded body of an example in which suppression of fogging (low haze value), high strength (high bending elastic modulus and high bending strength), and lightweight properties (low density) were achieved had a haze value of less than 10%, a bending elastic modulus of 3.0 GPa or greater, a bending strength of 68.5 MPa or greater, and a density of 1.01 g/cm$^3$ or less.

In Examples 1 to 4 in which the plant fibers (A-1, modified cellulose fibers), the thermoplastic resin (B), and the compound (C) having a reactivity with a carboxy group were used, the densities were low, the bending elastic moduluses and the bending strengths were high, the haze values were low, and the above-described values were achieved at high levels. Among these, Example 1 showed a high quality with the highest bending elastic modulus and bending strength and the lowest haze value.

In Examples 1 to 4, the values of the bending elastic moduluses and the bending strengths were particularly improved. The reason for this is considered to be that the compatibility and the interfacial strength between the plant fibers and the resins were improved due to hydrophobic modification of the plant fibers and thus the mechanical properties were improved. Further, since each composition contained the compound (C) having a reactivity with a carboxy group, the haze value was able to be suppressed to be extremely low as compared with Comparative Example 1 and Comparative Example 3.

In Comparative Example 1 in which the composition did not contain the compound (C) having a reactivity with a carboxy group and the plant fibers (A-1, modified cellulose fibers) and the thermoplastic resin (B) were used, a relatively high bending elastic modulus was achieved, but the haze value was extremely high. The reason for this is considered to be that the modifying agent was desorbed in the step of applying heat such as the step of performing mixing with the resin or the step of performing molding, and thus fogging was caused.

In Comparative Example 2 in which calcium oxide of inorganic alkali was used in place of the compound (C) having a reactivity with a carboxy group, it cannot be said that the material is suitable for reduction of the weight of the molded body because the density was 1.049 g/cm3, which was high even though the bending elastic modulus and the haze value were excellent.

On the contrary, in Comparative Example 3 in which the amount of the inorganic alkali was reduced, the density was approximately the same as those of Examples 1 to 4, but the haze value was high. The reason for this is considered to be that the components causing fogging were not able to be sufficiently neutralized as a result of reducing the amount of the inorganic alkali.

«Production 2 of resin composition»

(Example 5)

10 parts of the modified cellulose fibers (A-1), 90 parts of a commercially available polypropylene resin (B, NOVATEC MA04A, manufactured by Japan Polypropylene Corporation), and 2 parts of a carbodiimide group-containing compound (C-1, CARBODILITE HMV-15CA, manufactured by Nisshinbo Chemical Inc.) as a compound having a reactivity with a carboxy group were melt-kneaded at 170°C with a LABO PLASTOMILL (manufactured by Toyo Seiki Seisaku-sho Ltd.) which is a kind of kneader, thereby obtaining a resin composition (D-8).

(Comparative Example 4)

A resin composition (D-9) was obtained in the same manner as in Example 5 except that a compound having a reactivity with a carboxy group was not added.

[Table 2]

| Evaluation Example 2 | | | | | | | | | |
|---|---|---|---|---|---|---|---|---|---|
| | (Modified) cellulose fiber | | PP resin (B) | Compound having reactivity with carboxy group | | Haze value (%) | Bending elastic modulus (GPa) | Bending strength (MPa) | Density (g/cm$^3$) |
| | | Parts by mass | Parts by mass | | Parts by mass | | | | |
| Example 5 | A-1 | 10 | 90 | C-1 | 2 | 0.4 | 2.4 | 65.2 | 0.940 |
| Comparative Example 4 | A-1 | 10 | 90 | - | - | 14.1 | 2.4 | 63.2 | 0.941 |

Evaluation Example 2 shows that a molded body of an example in which suppression of fogging (low haze value), high strength (high bending elastic modulus and high bending strength), and lightweight properties (low density) were achieved had a haze value of less than 5%, a bending elastic modulus of 2.4 GPa or greater, a bending strength of 65 MPa or greater, and a density of 0.95 g/cm$^3$ or less. Based on comparison with Evaluation Example 1, since the cellulose fiber ratio was further lowered and the member had a lower density, the target values of the mechanical properties are also different from those of Evaluation Example 1.

Similar to Evaluation Example 1, in Example 5 in which the plant fibers (A-1, modified cellulose fibers), the thermoplastic resin (B), and the compound (C) having a reactivity with a carboxy group were used, the density was low, the bending elastic modulus was high, the haze value was low, and the above-described values were achieved at high levels.

Since the composition contained the compound (C) having a reactivity with a carboxy group, the haze value was able to be suppressed to be extremely low as compared with Comparative Example 4.

«Production 3 of resin composition»

(Example 6)

20 parts of cedar wood flour (A-2), 80 parts of a commercially available polypropylene resin (B), and 4 parts of a carbodiimide group-containing compound (C-1) as a compound having a reactivity with a carboxy group were melt-kneaded at 170°C with a LABO PLASTOMILL (manufactured by Toyo Seiki Seisaku-sho Ltd.) which is a kind of kneader, thereby obtaining a resin composition (D-10).

(Example 7)

A resin composition (D-11) was obtained in the same manner as in Example 6 except that softwood unbleached kraft pulp (A-3, NUKP dried product) was used as the plant fibers.

(Comparative Example 5)

A resin composition (D-12) was obtained in the same manner as in Example 6 except that a compound having a reactivity with a carboxy group was not added.

(Comparative Example 6)

A resin composition (D-13) was obtained in the same manner as in Example 6 except that 2 parts of calcium oxide (c-5) was used in place of the compound having a reactivity with a carboxy group.

(Comparative Example 7)

A resin composition (D-14) was obtained in the same manner as in Example 7 except that a compound having a reactivity with a carboxy group was not added.

[Table 3]

| Evaluation Example 3 | | | | | | | | | |
|---|---|---|---|---|---|---|---|---|---|
| | Plant fiber | | PP resin (B) | Compound having reactivity with carboxy group | | Haze value (%) | Bending elastic modulus (GPa) | Bending strength (MPa) | Density (g/cm$^3$) |
| | | Parts by mass | Parts by mass | | Parts by mass | | | | |
| Example 6 | A-2 | 20 | 80 | C-1 | 4 | 0.9 | 2.6 | 68.3 | 0.993 |
| Example 7 | A-3 | 20 | 80 | C-1 | 4 | 0.5 | 2.6 | 67.4 | 0.993 |
| Comparative Example 5 | A-2 | 20 | 80 | - | - | 13.8 | 2.7 | 67.9 | 0.992 |
| Comparative Example 6 | A-2 | 20 | 80 | c-5 | 2 | 0.6 | 2.7 | 66.7 | 1.038 |
| Comparative Example 7 | A-3 | 20 | 80 | - | - | 10.1 | 2.6 | 67.2 | 0.991 |

Evaluation Example 3 shows that a molded body of an example in which suppression of fogging (low haze value), high strength (high bending elastic modulus and high bending strength), and lightweight properties (low density) were achieved had a haze value of less than 10%, a bending elastic modulus of 2.5 GPa or greater, a bending strength of 67.3 MPa or greater, and a density of 1.01 g/cm$^3$ or less. Further, the comparison was made between plant fiber materials that had not been hydrophobically modified, the target values of the physical properties of the bending elastic moduluses and the bending strengths were lower than those of Evaluation Example 1. From this viewpoint, it is more preferable that plant fibers are hydrophobically modified.

In Examples 6 and 7 in which the plant fibers (A-2, cedar wood flour, or A-3, UBKP), the thermoplastic resin (B), and the compound (C) having a reactivity with a carboxy group were used, the densities were low, the bending elastic moduluses were high, the haze valued were low, and the above-described values were achieved at high levels. Since the composition contained the compound (C) having a reactivity with a carboxy group, the haze values was able to be suppressed to be extremely low as compared with Comparative Examples 5 and 7.

In Comparative Examples 5 and 7 in which each composition did not contain the compound (C) having a reactivity with a carboxy group and the plant fibers (A-2, cedar wood flour, or A-3, UBKP) and the thermoplastic resin (B) were used, relatively high elastic moduluses were achieved, but the haze values were high. The reason for this is

considered to be that the volatile components such as organic acids contained in the plant fibers were desorbed in the step of applying heat such as the step of performing mixing with the resin and or the step of performing molding, and thus fogging was caused.

In Comparative Example 6 in which calcium oxide of inorganic alkali was used in place of the compound (C) having a reactivity with a carboxy group, it cannot be said that the material is suitable for reduction of the weight of the molded body because the density was 1.038 g/$cm^3$, which was high even though the bending elastic modulus and the haze value were excellent.

According to the resin composition for molding materials according to an embodiment of the present invention, it was found that a lightweight molded body with suppressed fogging and high rigidity can be provided.

The configurations, the combinations thereof, and the like of the embodiments are merely examples, and addition, omission, substitution, and other modification of configurations can be made within a range not departing from the scope of the present invention. Further, the present invention is not limited to the embodiments and only limited by the scope of the claims.

## Claims

**1.** A resin composition for molding materials, comprising:

a plant fiber (A);
a thermoplastic resin (B); and
a compound (C) having a reactivity with a carboxy group.

**2.** The resin composition for molding materials according to Claim 1,
wherein the plant fiber (A) is a chemically modified product modified with an acid anhydride.

**3.** The resin composition for molding materials according to Claim 1 or 2,
wherein the thermoplastic resin (B) is a polyolefin-based resin.

**4.** The resin composition for molding materials according to any one of Claims 1 to 3,
wherein the compound (C) having a reactivity with a carboxy group is a compound containing at least one functional group selected from the group consisting of a carbodiimide group and an oxazoline group.

**5.** A molded body which is obtained by molding the resin composition for molding materials according to any one of Claims 1 to 4.

**6.** A method for producing a resin composition for molding materials, the method comprising:
a step of melt-kneading a plant fiber (A), a thermoplastic resin (B), and a compound (C) having a reactivity with a carboxy group.

**7.** The method for producing a resin composition for molding materials according to Claim 6,
wherein in the step of the melt-kneading, the plant fiber (A) is defibrated and dispersed in the thermoplastic resin (B).

**8.** The method for producing a resin composition for molding materials according to Claim 6 or 7,
wherein a mass ratio of the plant fiber (A)/the thermoplastic resin (B)/the compound (C) having a reactivity with a carboxy group is 5 to 55/35 to 94/0.2 to 10.

FIG. 1

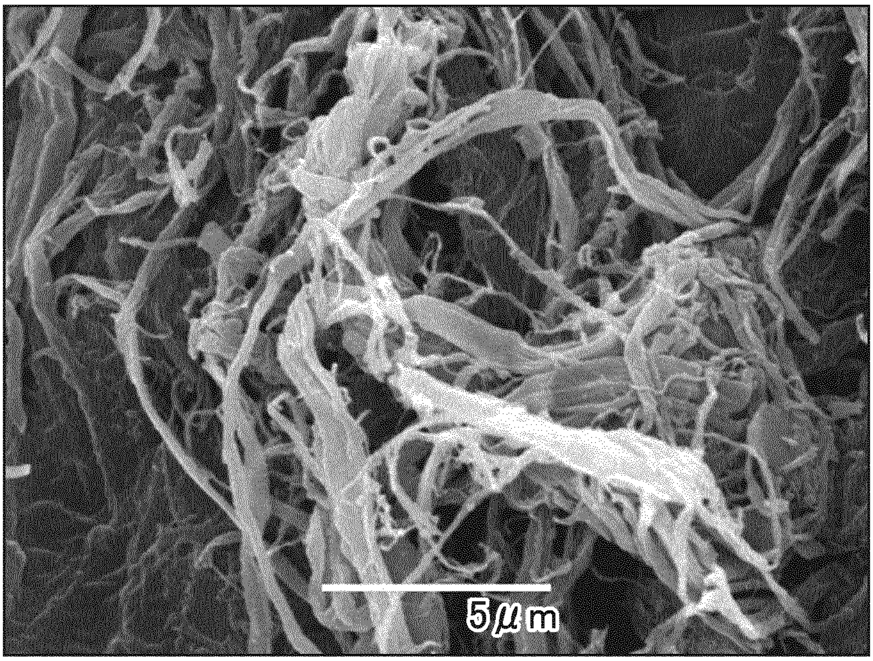

## INTERNATIONAL SEARCH REPORT

International application No.
PCT/JP2020/019184

A. CLASSIFICATION OF SUBJECT MATTER
C08L 101/00(2006.01)i; C08K 5/16(2006.01)i; C08K7/02(2006.01)i
FI: C08L101/00; C08K7/02; C08K5/16

According to International Patent Classification (IPC) or to both national classification and IPC

B. FIELDS SEARCHED

Minimum documentation searched (classification system followed by classification symbols)
C08L101/00; C08K5/16; C08K7/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2013/133093 A1 (KYOTO UNIVERSITY) 12.09.2013 (2013-09-12) claims, paragraphs [0040], [0041], [0049], [0263]-[0268], [0314]-[0325] | 1-8 |
| X<br>A | JP 2011-213754 A (KYOTO UNIVERSITY) 27.10.2011 (2011-10-27) claims, paragraphs [0077], [0089]-[0102], [0110]-[0114] | 1-3, 5-8<br>4 |
| X<br>A | JP 2010-215793 A (IDEMITSU KOSAN CO., LTD.) 30.09.2010 (2010-09-30) claims, paragraphs [0050], [0051], [0055]-[0061], tables 1, 2 | 1, 3-8<br>2 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
14 July 2020 (14.07.2020)

Date of mailing of the international search report
28 July 2020 (28.07.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**
Information on patent family members

International application No.
PCT/JP2020/019184

| Patent Documents referred in the Report | Publication Date | Patent Family | Publication Date |
|---|---|---|---|
| WO 2013/133093 A1 | 12 Sep. 2013 | US 2015/0105499 A1 claims, paragraphs [0018], [0019], [0027], [0257]-[0269], [0314]-[0327] CN 104334615 A | |
| JP 2011-213754 A | 27 Oct. 2011 | (Family: none) | |
| JP 2010-215793 A | 30 Sep. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019092856 A
- JP 2018095708 A
- WO 2014017274 A
- US 20080146701 A
- WO 2013133093 A